# EUROPÄISCHE PATENTSCHRIFT

(11) **EP 1 494 069 B1**
(45) Veröffentlichungstag und Bekanntmachung des Hinweises auf die Patenterteilung: **06.06.2007**
(21) Anmeldenummer: 03101979.7
(22) Anmeldetag: 02.07.2003
(51) Int. Cl.: G03B 42/04, G03C 3/00

(54) **Röntgenkassette mit seitlichem Anschlag für den Bildträger**
X-ray cassette with lateral abutment for the image storage sheet
Cassette radiographique comprenant une surface d'arrêt pour la couche de stockage

(43) Veröffentlichungstag der Anmeldung: 05.01.2005
(73) Patentinhaber: Agfa-Gevaert HealthCare GmbH, 51373 Leverkusen (DE)
(72) Erfinder: Widemann, Ernst, 85241, München (DE); Seidl, Florian, 85457, Wörth (DE); Heinz, Jürgen, 87616, Marktoberdorf (DE)

(56) Entgegenhaltungen:
- EP-A- 1 315 030
- DE-C- 3 401 577
- US-A- 4 434 501
- US-A- 4 467 919
- US-A- 4 688 243
- US-A- 5 008 920

## Beschreibung

Die Erfindung betrifft eine Röntgenkassette für einen Bildträger für Röntgenaufnahmen mit einem Kassettenboden, auf welchem der Bildträger aufliegen kann, einem Kassettendeckel, welcher relativ zum Kassettenboden bewegt werden kann, einem Anschlag, an welchem der Bildträger ausgerichtet werden kann, und einem oder mehreren Andruckelementen, welche während der Bewegung des Kassettendeckels relativ zum Kassettenboden an den auf dem Kassettenboden liegenden Bildträger gedrückt werden und dabei den Bildträger in Richtung des Anschlags befördern.

Röntgenkassetten dieser Art werden insbesondere bei mammographischen Röntgenaufnahmen eingesetzt. Um eine möglichst vollständige Untersuchung des Brustgewebes zu gewährleisten, muss der Bildträger zuverlässig an der am Körper anliegenden Schmalseite der Röntgenkassette ausgerichtet sein.

Bei der aus der DE 34 01 577 C1 bekannten Röntgenkassette ist der Kassettendeckel mit einer Andruckvorrichtung versehen, welche aus einer Schaumstoffplatte mit einer darauf befindlichen Folie besteht. Beim Zuklappen des Kassettendeckels drückt die scharnierseitige Unterkante der Andruckvorrichtung auf den auf dem Kassettenboden liegenden Bildträger und befördert diesen in Richtung der Schmalseite der Röntgenkassette.

Bei Anwendungen mit einem Röntgenfilm als Bildträger wird hierdurch eine zuverlässige Ausrichtung des Bildträgers an der Schmalseite gewährleistet. Im Bereich der Computer-Radiographie (CR) wird jedoch als Bildträger eine Phosphorschicht verwendet, in welcher Röntgeninformationen als latentes Bild gespeichert werden. Solche Phosphorschichten weisen im Allgemeinen eine höhere Dicke und ein höheres Gewicht auf als Röntgenfilme. Bei der bekannten Röntgenkassette sind daher die auf die Phosphorschicht wirkenden Kräfte im Allgemeinen zu gering, um eine zuverlässige Ausrichtung und Arretierung der Phosphorschicht an der Schmalseite zu gewährleisten.

Es ist Aufgabe der Erfindung, eine Röntgenkassette anzugeben, bei welcher eine zuverlässige Ausrichtung und/oder Arretierung des Bildträgers, insbesondere einer Phosphorschicht, gewährleistet ist.

Diese Aufgabe wird gemäß Anspruch 1 dadurch gelöst, dass mindestens eines der Andruckelemente mindestens zwei elastische Elemente umfasst, welche unterschiedliche elastische Eigenschaften aufweisen und miteinander gekoppelt sind, und beim Schließvorgang im Wesentlichen punktförmig auf den Bildträger drückt.

Die Erfindung basiert auf dem Gedanken, das Andruckelement mit mindestens zwei elastischen Elementen, welche unterschiedliche Federkonstanten bzw. Elastizitätsmodule aufweisen, derart auszugestalten, dass - abhängig von der jeweiligen Phase des Schließvorgangs - unterschiedlich große Andruckkräfte auf dem Bildträger erzeugt werden können. Hierdurch wird eine zuverlässigere Beförderung des Bildträgers in Richtung des Anschlags erreicht. Insbesondere können hierbei die Andruckkräfte so eingestellt werden, dass diese im geschlossenen Zustand der Röntgenkassette höher sind als während der Schließvorgangs, so dass der Bildträger besonders zuverlässig am Anschlag arretiert wird.

Vorzugsweise weist ein erstes elastisches Element eine höhere Elastizität auf als ein zweites elastisches Element. Insbesondere weist dabei das erste elastische Element eine niedrigere Federkonstante bzw. einen niedrigeren Elastizitätsmodul auf als das zweite elastische Element. Da die beiden elastischen Elemente miteinander gekoppelt sind, wird bei einer bestimmten Andruckkraft das erste elastische Element stärker verformt als das zweite elastische Element. Dies ist insbesondere bei elastischen Elementen mit stark unterschiedlichen Federkonstanten bzw. Elastizitätsmodulen von Bedeutung, da dann bei niedrigeren Andruckkräften, wie beispielsweise zu Beginn der Schwenkbewegung des Kassettendeckels in Richtung auf den Kassettenboden, nahezu ausschließlich eine Verformung des ersten elastischen Elements erfolgt, während das zweite elastische Element praktisch nicht verformt wird. Bei höheren Andruckkräften, insbesondere wenn das erste elastische Element bereits an einem Anschlagelement anliegt und nicht mehr weiter verformt werden kann, ist die Situation umgekehrt. Die Andruckkräfte rühren dann im Wesentlichen von der Verformung der des zweiten elastischen Elements her.

Vorzugsweise ist das erste elastische Element als Feder, insbesondere als Schraubenfeder oder Blattfeder aus Metall, ausgebildet. Mit metallischen Federn kann auf einfache Weise eine hohe Elastizität, das heißt eine niedrige Federkonstante, realisiert werden.

Es ist darüber hinaus bevorzugt, dass das zweite elastische Element durch ein elastisches Material, wie z. B. Gummi, insbesondere Silikon-Gummi, gebildet wird. Durch entsprechende Wahl des Gummis kann die erforderliche niedrigere Elastizität, das heißt ein höherer Elastizitätsmodul, des zweiten elastischen Elements realisiert werden.

Das zweite elastische Element ist vorzugsweise derart mit dem ersten elastischen Element gekoppelt, dass das zweite elastische Element den Bildträger, insbesondere während und/oder nach Beendigung des Schließvorgangs, kontaktieren kann. Hierdurch werden Reibungskräfte zwischen den Andruckelementen und dem Bildträger erhöht, so dass ein besonders zuverlässiger Transport des Bildträgers in Richtung des Anschlags bzw. eine noch zuverlässigere Arretierung gewährleistet ist.

Es ist bevorzugt, dass die Reibungskräfte zwischen dem elastischen Material und dem Bildträger größer sind als zwischen dem Bildträger und dem Kassettenboden. Dies wird insbesondere durch eine entsprechende Wahl des elastischen Materials erreicht. Hierdurch wird ein zuverlässiger Transport des Bildträgers während des gesamten Schließvorgangs gewährleistet.

Um ausreichend hohe Reibungskräfte zu gewährleisten, weist das elastische Material vorzugsweise eine Härte von weniger als 60 Shore A auf.

Eine weitere Ausgestaltung der Erfindung sieht vor, dass während einer letzten Phase der Bewegung des Kassettendeckels relativ zum Kassettenboden nur noch das zweite elastische Element weiter verformt wird. Das erste elastische Element wird in dieser Phase des Schließvorgangs dagegen nicht mehr weiter verformt. Die während der letzten Phase oder bei geschlossener Röntgenkassette auf den Bildträger wirkenden Andruckkräfte der Andruckelemente rühren daher im Wesentlichen nur noch von der zunehmenden Verformung des zweiten elastischen Elements her. Hierdurch wird eine besonders sichere Arretierung des Bildträgers am Anschlag gewährleistet.

Vorzugsweise sind hierbei die Andruckelemente derart ausgestaltet, dass während der letzten Phase der Bewegung das erste elastische Element vollständig zusammengedrückt ist oder an mindestens einem ersten Anschlagelement anliegt, so dass nur noch das zweite elastische Element weiter verformt wird. Hierdurch wird auf einfache Weise eine sichere Arretierung des Bildträgers realisiert.

Eine besonders bevorzugte Ausgestaltung der Erfindung sieht vor, die Andruckelemente derart anzuordnen, dass sie im geschlossenen Zustand der Röntgenkassette außerhalb eines Flächenbereichs liegen, in welchem während einer Röntgenaufnahme eine Erfassung von Röntgenstrahlung mittels eines oder mehrerer Detektoren vorgesehen ist.

Diese Ausgestaltung basiert auf dem Gedanken, anstelle einer flächig oder linienförmig ausgebildeten Andruckvorrichtung ein oder mehrere punktförmig auf den Bildträger drückende Andruckelemente vorzusehen und diese derart anzuordnen, dass sie beim Schließvorgang lediglich auf Bereiche des Bildträgers drücken, die außerhalb eines Flächenbereichs liegen, in welchem während der Röntgenaufnahme die durch das zu untersuchende Objekt hindurchtretende Röntgenstrahlung mittels Detektoren erfasst wird. Eine Erfassung der durch das zu untersuchende Objekt hindurchtretenden Röntgenstrahlung ist erforderlich, um daraus ein Maß für die Dosis der Bestrahlung des Bildträgers abzuleiten. Die Dauer einer Röntgenaufnahme wird auf der Grundlage der gemessenen Dosis dabei jeweils so eingestellt, dass der Bildträger auch bei unterschiedlich dicken Objekten mit einer gewünschten Röntgenstrahlungsdosis bestrahlt wird.

Die für eine solche Dosismessung vorgesehenen Flächenbereiche einer Röntgenkassette werden im Allgemeinen durch eine für den jeweiligen Diagnosezweck vorgegebene Norm, beispielsweise durch die Norm ISO/FDIS 4090 für mammographischen Untersuchungen, definiert.

Durch die erfindungsgemäße Anordnung der Andruckelemente außerhalb des für die Dosismessung vorgesehenen Flächenbereichs können diese derart ausgestaltet werden, dass ihre Andruckkräfte auf den Bildträger erhöht werden, ohne dabei gleichzeitig die Dosismessung zu beeinflussen oder den Bildträger im genannten Flächenbereich, im welchem auch ein wesentlicher Teil der Bildinformation der Röntgenaufnahme liegt, zu beschädigen. Die höheren Andruckkräfte führen zu einer noch zuverlässigeren Ausrichtung und Arretierung des Bildträgers, insbesondere von Phosphorschichten.

In einer weiteren bevorzugten Ausgestaltung der Erfindung ist vorgesehen, dass die Andruckelemente am Kassettendeckel angeordnet sind. Die Andruckelemente sind hierbei insbesondere derart am Kassettendeckel positioniert, dass sie den Bildträger sowohl während des gesamten Schließvorgangs als auch nach dessen Beendigung bei geschlossener Röntgenkassette lediglich in Bereichen außerhalb der aktiven Bildfläche berühren. Insgesamt wird hierbei der konstruktive Aufwand niedrig gehalten und gleichzeitig eine Beschädigung des Bildträgers aufgrund zu hoher Andruckkräfte vermieden.

In einer weiteren Ausgestaltung der Erfindung ist vorgesehen, dass der Kassettendeckel mittels einer Schwenkbewegung auf den Kassettenboden zu bewegt werden kann. Die Schwenkbewegung stellt hierbei einen einfach zu realisierenden Schließmechanismus dar. Alternativ kann der Kassettendeckel aber auch mittels einer Schubbewegung oder einer Kombination aus einer Schwenk- und Schubbewegung relativ zum Kassettenboden zu bewegt werden, um die Röntgenkassette zu schließen.

Vorzugsweise sind der Kassettendeckel und der Kassettenboden mit einem Scharnier miteinander verbunden. Als Scharnier dient vorzugsweise eine gefalzte Kunststoffleiste oder ein gefalztes Kunststoffband, deren bzw. dessen Falz das Scharniergelenk bildet. Die Schwenkbewegung kann hierdurch auf besonders einfache Weise realisiert werden. Alternativ kann aber auch auf ein Scharnier verzichtet werden und der Kassettendeckel schwenkbar am Kassettenboden gelagert sein.

Vorzugsweise sind die Andruckelemente in einem Bereich des Kassettendeckels angeordnet, welcher nahe bei dem Scharnier liegt. Die Höhe der Andruckelemente über dem Kassettendeckel kann hierdurch entsprechend niedrig gewählt werden, so dass für ein Zurückweichen bzw. für eine Verformung der Andruckelemente wenig Platz erforderlich ist. Hierdurch wird eine kompakte Konstruktion der Röntgenkassette ermöglicht.

Vorzugsweise sind die Andruckelemente in einem Bereich des Kassettendeckels angeordnet, welcher nahe bei dem Scharnier liegt. Insbesondere beträgt der Abstand der Andruckelemente vom Scharnier höchstens 38 mm. Hierdurch kann die Höhe der Andruckelemente über dem Kassettendeckel entsprechend niedrig gewählt werden, so dass für ein Zurückweichen bzw. für eine Verformung der Andruckelemente nur wenig Platz erforderlich ist. Hierdurch wird eine kompakte Konstruktion der Röntgenkassette ermöglicht.

Eine weitere Ausgestaltung sieht vor, dass die Andruckelemente einen Abstand von mindestens 210 mm voneinander aufweisen. Hierdurch wird eine Verteilung der Andruckkräfte auf den Bildträger realisiert, welche eine besonders zuverlässige Ausrichtung und Arretierung gewährleistet.

Eine Weiterbildung der Erfindung sieht vor, dass der Abstand der Andruckelemente von den Seitenwänden der Röntgenkassette mindestens so groß ist wie die Differenz zwischen dem lichten Abstand der Seitenwände und der Breite des Bildträgers. Hierdurch ist gewährleistet, dass der Bildträger auch dann noch von den Andruckelementen kontaktiert und zuverlässig in Richtung des Anschlags befördert werden kann, wenn er an einer Seitenwand des Kassettenbodens der Röntgenkassette anliegt.

Die Erfindung wird nachfolgend anhand von Figuren näher erläutert.

Es zeigen:
- Fig. 1: eine erfindungsgemäße Röntgenkassette in einem teilweise geöffneten Zustand;
- Fig. 2: die in Fig. 1 dargestellte Röntgenkassette im geschlossenen Zustand;
- Fig. 3: eine Draufsicht auf eine erfindungsgemäße Röntgenkassette im vollständig geöffneten Zustand; und
- Fig. 4: einen Querschnitt durch ein Andruckelement für eine erfindungsgemäße Röntgenkassette.

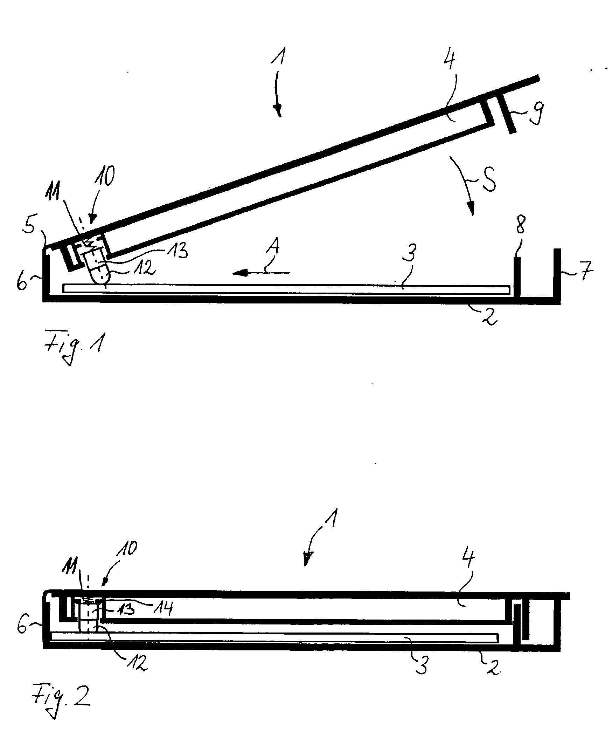

Fig. 1 zeigt einen Querschnitt einer erfindungsgemäßen Röntgenkassette 1 in einem teilweise geöffneten Zustand. Die Röntgenkassette 1 umfasst einen Kassettenboden 2 und einen Kassettendeckel 4, welcher mittels einer Schwenkbewegung in Richtung S auf den Kassettenboden 2 zu bewegt werden kann, um die Röntgenkassette 1 zu schließen.

Der Kassettenboden 2 weist eine Schmalseite 6 auf, welche als Anschlag für den auf dem Kassettenboden 2 liegenden Bildträger 3, insbesondere eine Phosphorschicht, dient. Der Kassettendeckel 4 ist über ein Scharnier 5 mit der Schmalseite 6 des Kassettenbodens 2 verbunden. Das Scharnier 5 wird vorzugsweise durch eine gefalzte Kunststoffleiste oder ein gefalztes Kunststoffband gebildet, deren bzw. dessen Falz das Scharniergelenk bildet. Der Kassettenboden 2 weist eine weitere Schmalseite 7 sowie eine davon beabstandete erste Verschlussrippe 8 auf, wobei deren Abstand zueinander derart gewählt wird, dass eine am Kassettendeckel 4 angeordnete zweite Verschlussrippe 9 im geschlossenen Zustand der Röntgenkassette 1 in den Zwischenraum zwischen der Schmalseite 7 und der ersten Verschlussrippe 8 einfahren kann, um den Bildträger 3 zuverlässig gegen Umgebungslicht abzuschirmen.

Am Kassettendeckel 4 ist ein Andruckelement 10 angeordnet, welches in dem dargestellten Beispiel zwei miteinander gekoppelte elastische Elemente 11 und 12 mit unterschiedlichen elastischen Eigenschaften umfasst. Das erste elastische Element 11 ist in diesem Beispiel als Schraubenfeder ausgebildet und mit einem Trägerelement 13 gekoppelt, welches das zweite elastische Element 12 trägt. Das zweite elastische Element 12 wird vorzugsweise durch ein elastisches Material gebildet, beispielsweise Silikon-Gummi. Wird der Kassettendeckel 4 mittels einer Schwenkbewegung in Richtung S auf den Kassettenboden 2 zu bewegt, so drückt das Andruckelement 10 mit dem elastischen Material des zweiten elastischen Elements 12 auf den Bildträger 3. Infolge der zwischen dem zweiten elastischen Element 12 und dem Bildträger 3 entstehenden Haftreibung wird letzterer in Richtung A zu der als Anschlag dienenden Schmalseite 6 des Kassettenbodens 2 befördert, bis der Bildträger 3 schließlich an der Schmalseite 6 anliegt.

Das elastische Material wird hierbei so gewählt, dass die Haftreibung zwischen dem Material und dem Bildträger 3 ausreichend hoch ist, um eine zuverlässige Beförderung des Bildträgers in Richtung der Schmalseite 6 zu gewährleisten. Andererseits ist bei der Auswahl des elastischen Materials darauf zu achten, dass die Gleitreibung zwischen dem Material und dem Bildträger 3 ausreichend niedrig ist, um ein Gleiten des Materials über den Bildträger 3 zu ermöglichen, wenn dieser vor Beendigung des Schließvorgangs bereits an der Schmalseite 6 anliegt.

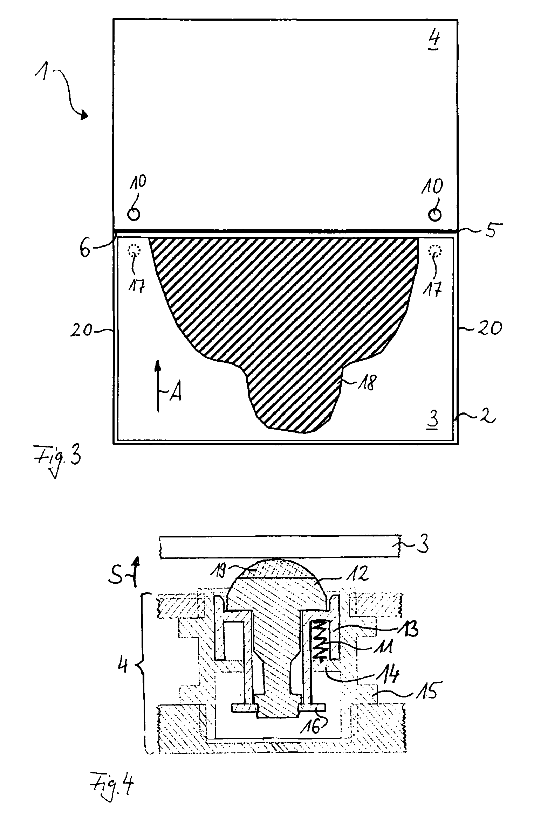

Fig. 2 zeigt die in Fig. 1 dargestellte Röntgenkassette im geschlossenen Zustand, in welchem der Bildträger 3 an der als Anschlag ausgebildeten Schmalseite 6 des Kassettenbodens 2 anliegt und an dieser ausgerichtet ist. Wie zu erkennen ist, liegt in diesem Zustand das Trägerelement 13 des Andruckelements 10 an ersten Anschlagelementen 14 an, welche ein weiteres Zurückweichen des zweiten elastischen Elements 12 verhindern. Aus diesem Grund wird kurz vor Beendigung des Schließvorgangs nur noch das zweite elastische Element 12 verformt, wobei die aus der Verformung resultierenden Andruckkräfte auf den Bildträger 3 durch den im Vergleich zum ersten elastischen Element 11 höheren Elastizitätsmodul größer sind als während des Schließvorgangs, bei welchem die Andruckkräfte im Wesentlichen durch die Verformung des ersten elastischen Elements 11 mit einem kleineren Elastizitätsmodul bzw. einer kleineren Federkonstante herrühren.

Durch dieses gekoppelte Zwei-Feder-System wird erreicht, dass im geschlossenen Zustand deutlich höhere Andruckkräfte auf den Bildträger 3 wirken können und diesen damit wesentlich zuverlässiger in Anschlagposition halten können als dies bei aus dem Stand der Technik bekannten Mechanismen gewährleistet ist. Insbesondere wird der Bildträger 3 bei Erschütterungen und Stößen, wie z. B. bei einem Herunterfallen der Röntgenkassette, zuverlässig und sicher in seiner Anschlagposition gehalten.

Fig. 3 zeigt eine vollständig geöffnete Röntgenkassette 1 in Draufsicht. Am Kassettendeckel 4 sind zwei Andruckelemente 10 angebracht. Wird der Kassettendeckel 4 mittels einer Schwenkbewegung um das Scharnier 5 auf den Kassettenboden 2, auf welchem der Bildträger 3 liegt, zu bewegt, so kommen die Andruckelemente 10 in Bereichen 17 auf dem Bildträger 3 zu liegen.

Die Andruckelemente 10 sind derart am Kassettendeckel 4 angeordnet, dass die Bereiche 17 außerhalb eines Flächenbereichs 18 liegen, in welchem während einer Röntgenaufnahme Dosismessungen durchgeführt werden. Bei einer Dosismessung wird die vom Kassettenboden 2 her durch die geschlossene Röntgenkassette 1 hindurchtretende Röntgenstrahlung von Detektoren erfasst, welche innerhalb des Flächenbereichs 18 liegen und oberhalb des geschlossenen Kassettendeckels 4 angeordnet sind.

Durch die Anordnung der Andruckelemente 10 außerhalb des Flächenbereichs 18 ist gewährleistet, dass die für den jeweiligen Diagnosezweck erforderlichen Dosismessungen nicht durch die Andruckelemente 10 gestört und der Bildträger nicht durch die Andruckkräfte der Andruckelemente 10 beeinträchtigt oder beschädigt werden kann. Daher können - mittels entsprechend gestalteter Andruckelemente 10 - die Andruckkräfte, welche in den Bereichen 17 auf den Bildträger 3 wirken, ausreichend hoch gewählt werden, um eine zuverlässige Beförderung des Bildträgers 3 in Richtung A auf die als Anschlag ausgebildete Schmalseite 6 des Kassettenbodens 2 zu gewährleisten.

Der im gezeigten Beispiel stark schematisiert dargestellte Flächenbereich 18 ist für mammographische Zwecke bestimmt und wird in seiner Größe und seinem Verlauf im Allgemeinen durch die Norm ISO/FDIS 4090 vorgegeben.

Zusätzlich zu der oben beschriebenen Anordnung der Andruckelemente 10 können diese gemäß dem im Zusammenhang mit den Figuren 1 und 2 beschriebenen Ausführungsbeispiel derart ausgestaltet werden, dass die bei geschlossener Röntgenkassette 1 auf den Bildträger 3 wirkenden Andruckkräfte der Andruckelemente 10 deutlich größer sind als während der Schließbewegung, so dass der Bildträger 3 bei geschlossener Röntgenkassette 1 in besonders zuverlässiger Weise in Anschlagposition arretiert wird.

Wie in Fig. 3 zu erkennen ist, sind die Andruckelemente 10 nahe bei dem Scharnier 5 angeordnet. Vorzugsweise beträgt deren Abstand vom Scharnier 5 höchstens 38 mm. Die Andruckelemente 10 weisen einen Abstand von mindestens 210 mm voneinander auf, ihr Abstand von den Seitenwänden 20 der Röntgenkassette 1 ist jedoch mindestens so groß wie die Differenz zwischen dem lichten Abstand der Seitenwände 20 und der Breite des Bildträgers 3. Hierdurch wird erreicht, dass auch dann beide Andruckelemente 10 auf den Bildträger 3 drücken und ihn in Richtung der Schmalseite 6 befördern können, wenn dieser ganz an einer der beiden Seitenwände 20 anliegt.

Fig. 4 zeigt einen detaillierten Querschnitt durch ein Andruckelement 10 für eine erfindungsgemäße Röntgenkassette. Das Andruckelement 10 weist ein, insbesondere zylinderförmiges, Andruckelementgehäuse 15 auf, in welchem das Trägerelement 13 beweglich gelagert ist. Das Trägerelement 13 ist mittels des ersten elastischen Elements 11, welches in diesem Beispiel als Schraubenfeder ausgebildet ist, gegen das Andruckelementgehäuse 15 vorgespannt. Als zweites elastisches Element 12 dient ein Gummistöpsel, welcher mit dem Trägerelement 13 lösbar verbunden ist, insbesondere auf oder in das Trägerelement 13 auf- bzw. eingesteckt ist.

Im dargestellten Beispiel liegt das Trägerelement 13 bereits am ersten Anschlagelement 14 des Andruckelementgehäuses 15 an, so dass jede weitere Relativbewegung des Kassettendeckels 4 in Richtung S auf dem Bildträger 3 zu einer Verformung des zweiten elastischen Elements 12 führt. Hierfür ist insbesondere der in der Figur doppelt schraffierte Verformungsbereich 19 des zweiten elastischen Elements 12 vorgesehen. Dadurch, dass der Elastizitätsmodul des zweiten elastischen Elements 12 größer ist als die Federkonstante des als Schraubenfeder ausgebildeten ersten elastischen Elements 11, werden besonders hohe Andruckkräfte auf den Bildträger 3 erreicht.

Wird der Kassettendeckel 4 dagegen vom Bildträger 3 weg bewegt, so wird das Trägerelement 13 - aufgrund der Vorspannung gegen das Andruckelementgehäuse 15 durch das erste elastische Element 11 - zusammen mit dem zweiten elastischen Element 12 aus dem Andruckelementgehäuse 15 solange herausbewegt, bis ein am Trägerelement 13 befindliches zweites Anschlagelement 16 am ersten Anschlagelement 14 des Andruckelementgehäuses 15 anliegt. Das Andruckelement 10 erreicht dann seine maximale Höhe über dem Kassettendeckel 4.

In der beschriebenen Ausführung bilden die einzelnen Komponenten 11 bis 16 des Andruckelements 10 eine selbstständige Einheit, welche sich auf einfache Weise in den Kassettendeckel 4 integrieren lässt und somit insbesondere für eine Nachrüstung von bereits gefertigten und ggf. im Einsatz befindlichen Röntgenkassetten geeignet ist.

## Patentansprüche

1. Röntgenkassette für einen Bildträger (3) für Röntgenaufnahmen mit
- einem Kassettenboden (2), auf welchem der Bildträger (3) aufliegen kann,
- einem Kassettendeckel (4), welcher relativ zum Kassettenboden (2) bewegt werden kann,
- einem Anschlag (6), an welchem der Bildträger (3) ausgerichtet werden kann, und
- einem oder mehreren Andruckelementen (10), welche beim Schließvorgang während der Bewegung des Kassettendeckels (4) relativ zum Kassettenboden (2) an den auf dem Kassettenboden (2) liegenden Bildträger (3) gedrückt werden und dabei den Bildträger (3) in Richtung (A) des Anschlags (6) befördern,
**dadurch gekennzeichnet, dass**
mindestens eines der Andruckelemente (10) mindestens zwei elastische Elemente (11, 12) umfasst, welche unterschiedliche elastische Eigenschaften aufweisen und miteinander gekoppelt sind, und beim Schließvorgang im Wesentlichen punktförmig auf den Bildträger (3) drückt.

2. Röntgenkassette nach Anspruch 1, wobei ein erstes elastisches Element (11) eine höhere Elastizität aufweist als ein zweites elastisches Element (12).

3. Röntgenkassette nach einem der vorangehenden Ansprüche, wobei ein erstes elastisches Element (11) als Feder ausgebildet ist.

4. Röntgenkassette nach einem der vorangehenden Ansprüche, wobei ein zweites elastisches Element (12) durch ein elastisches Material gebildet wird.

5. Röntgenkassette nach Anspruch 4, wobei das elastische Material vorwiegend aus Gummi, insbesondere Silikon-Gummi, besteht.

6. Röntgenkassette nach einem der vorangehenden Ansprüche, wobei das zweite elastische Element (12) derart mit dem ersten elastischen Element (11) gekoppelt ist, dass das zweite elastische Element (12) den Bildträger (3) kontaktieren kann.

7. Röntgenkassette nach Anspruch 6, wobei die Reibungskräfte zwischen dem zweiten elastischen Element (12), insbesondere dem elastischen Material, und dem Bildträger (3) größer sind als zwischen dem Bildträger (3) und dem Kassettenboden (2).

8. Röntgenkassette nach einem der Ansprüche 4 bis 7, wobei das elastische Material eine Härte von weniger als 60 Shore A aufweist.

9. Röntgenkassette nach einem der vorangehenden Ansprüche, wobei während einer letzten Phase der Bewegung des Kassettendeckels (4) relativ zum Kassettenboden (2) nur noch das zweite elastische Element (12) weiter verformt wird.

10. Röntgenkassette nach Anspruch 9, wobei während der letzten Phase der Bewegung das erste elastische Element (11) vollständig zusammengedrückt ist oder an mindestens einem ersten Anschlagelement (14) anliegt.

11. Röntgenkassette nach einem der vorangehenden Ansprüche, wobei die Andruckelemente (10) derart angeordnet sind, dass sie im geschlossenen Zustand der Röntgenkassette (1) außerhalb eines Flächenbereichs (18) liegen, in welchem während einer Röntgenaufnahme eine Erfassung von Röntgenstrahlung mittels eines oder mehrerer Detektoren vorgesehen ist.

12. Röntgenkassette nach Anspruch 11, wobei die Andruckelemente (10) am Kassettendeckel (4) angeordnet sind.

13. Röntgenkassette nach einem der vorangehenden Ansprüche, wobei der Kassettendeckel (4) mittels einer Schwenkbewegung (S) auf den Kassettenboden (2) zu bewegt werden kann.

14. Röntgenkassette nach Anspruch 13, wobei der Kassettendeckel (4) und der Kassettenboden (2) mit einem Scharnier (5) miteinander verbunden sind.

15. Röntgenkassette nach Anspruch 14, wobei die Andruckelemente (10) nahe bei dem Scharnier (5) angeordnet sind.

16. Röntgenkassette nach Anspruch 15, wobei der Abstand der Andruckelemente (10) vom Scharnier (5) höchstens 38 mm beträgt.

17. Röntgenkassette nach einem der vorangehenden Ansprüche, wobei die Andruckelemente (10) einen Abstand von mindestens 210 mm voneinander aufweisen.

18. Röntgenkassette nach einem der vorangehenden Ansprüche, wobei der Abstand der Andruckelemente (10) von Seitenwänden (20) der Röntgenkassette (1) mindestens so groß ist wie die Differenz zwischen dem lichten Abstand der Seitenwände (20) und der Breite des Bildträgers (3).

## Claims

1. An X-ray cassette (1) for an image carrier (3) for X-rays comprising
- a cassette base (2) on which the image carrier (3) can rest,
- a cassette cover (4) which can be moved relative to the cassette base (2),
- a stop (6) to which the image carrier (3) can be aligned, and
- one or more pressing elements (10) which are pressed during the closure process when the cassette cover (4) is moved relative to the cassette base (2) against the image carrier (3) resting on the cassette base (2), and so convey the image carrier (3) in direction (A) of the stop (6),
**characterised in that**
at least one of the pressing elements (10) comprises at least two elastic elements (11, 12) which have different elastic properties and are coupled to one another, and during the closure process presses substantially punctiformly onto the image carrier (3).

2. The X-ray cassette according to Claim 1, a first elastic element (11) having greater elasticity than a second elastic element (12).

3. The X-ray cassette according to any of the preceding claims, a first elastic element (11) being in the form of a spring.

4. The X-ray cassette according to any of the preceding claims, a second elastic element (12) being made of an elastic material.

5. The X-ray cassette according to Claim 4, the elastic material consisting predominantly of rubber, in particular silicone rubber.

6. The X-ray cassette according to any of the preceding claims, the second elastic element (12) being coupled to the first elastic element (11) such that the second elastic element (12) can come into contact with the image carrier (3).

7. The X-ray cassette according to Claim 6, the friction forces between the second elastic element (12), in particular the elastic material, and the image carrier (3) being greater than between the image carrier (3) and the cassette base (2).

8. The X-ray cassette according to any of the Claims 4 to 7, the elastic material having a hardness of less than 60 Shore A.

9. The X-ray cassette according to any of the preceding claims, during a final phase of the movement of the cassette cover (4) relative to the cassette base (2) only the second elastic element (12) still being deformed.

10. The X-ray cassette according to Claim 9, during the final phase of the movement the first elastic element (11) being totally compressed or at least resting against a first stop element (14).

11. The X-ray cassette according to any of the preceding claims, the pressing elements (10) being disposed such that in the closed state of the X-ray cassette (1) they lie outside of a surface region (18) in which, while an X-ray is being taken, X-ray radiation is collected by means of one or more detectors.

12. The X-ray cassette according to Claim 11, the pressing elements (10) being disposed on the cassette cover (4).

13. The X-ray cassette according to any the preceding claims, it being possible to move the cassette cover (4) towards the cassette base (2) by means of a pivot movement (S).

14. The X-ray cassette according to Claim 13, the cassette cover (4) and the cassette base (2) being connected to one another by a hinge (5).

15. The X-ray cassette according to Claim 14, the pressing elements (10) being disposed close to the hinge.

16. The X-ray cassette according to Claim 15, the distance between the pressing elements (10) and the hinge (5) being max. 38 mm.

17. The X-ray cassette according to any of the preceding claims, the pressing elements (10) being at least 210 mm apart from one another.

18. The X-ray cassette according to any of the preceding claims, the distance between the pressing elements (10) and the side walls (20) of the X-ray cassette (1) being at least as great as the difference between the clear distance between the side walls (20) and the width of the image carrier (3).

## Revendications

1. Cassette radiographique pour un support d'image (3) pour des radiographies comprenant
- un fond de cassette (2), sur lequel le support d'image (3) peut reposer,
- un couvercle de cassette (4), qui peut être déplacé par rapport au fond de cassette (2),
- une butée (6), sur laquelle le support d'image (3) peut être orienté, et
- un ou plusieurs éléments d'appui (10), qui sont appuyés lors de l'opération de fermeture pendant le déplacement du couvercle de cassette (4) par rapport au fond de cassette (2) sur le support d'image (3) situé sur le fond de cassette (2) et transportent alors le support d'image (3) en direction (A) de la butée (6),
**caractérisée en ce que**
au moins l'un des éléments d'appui (10) comprend au moins deux éléments (11, 12) élastiques, qui présentent différentes propriétés élastiques et sont couplés entre eux, et appuie lors de l'opération de fermeture essentiellement de façon ponctuelle sur le support d'image (3) .

2. Cassette radiographique selon la revendication 1, un premier élément (11) élastique présentant une élasticité supérieure à un second élément (12) élastique.

3. Cassette radiographique selon l'une quelconque des revendications précédentes, un premier élément (11) élastique étant conçu comme ressort.

4. Cassette radiographique selon l'une quelconque des revendications précédentes, un second élément (12) élastique étant formé par un matériau élastique.

5. Cassette radiographique selon la revendication 4, le matériau élastique étant principalement à base de caoutchouc, en particulier à base de caoutchouc de silicone.

6. Cassette radiographique selon l'une quelconque des revendications précédentes, le second élément (12) élastique étant couplé avec le premier élément (11) élastique, de telle sorte que le second élément (12) élastique peut établir un contact avec le support d'image (3).

7. Cassette radiographique selon la revendication 6, les forces de frottement entre le second élément (12) élastique, en particulier le matériau élastique, et le support d'image (3) étant plus grandes qu'entre le support d'image (3) et le fond de cassette (2).

8. Cassette radiographique selon l'une quelconque des revendications 4 à 7, le matériau élastique présentant une dureté de moins de 60 Shore A.

9. Cassette radiographique selon l'une quelconque des revendications précédentes, seul le second élément (12) élastique étant encore déformé pendant une dernière phase du déplacement du couvercle de cassette (4) par rapport au fond de cassette (2).

10. Cassette radiographique selon la revendication 9, le premier élément (11) élastique étant comprimé complètement pendant la dernière phase du déplacement et s'appuyant sur au moins un premier élément de butée (14).

11. Cassette radiographique selon l'une quelconque des revendications précédentes, où les éléments d'appui (10) sont disposés de telle sorte que, lorsque la cassette radiographique (1) est fermée, ils se trouvent à l'extérieur d'une zone de surface (18), dans laquelle un enregistrement de rayonnement radiographique au moyen d'un ou de plusieurs détecteurs est prévu pendant une radiographie.

12. Cassette radiographique selon la revendication 11, les éléments d'appui (10) étant disposés sur le couvercle de cassette (4).

13. Cassette radiographique selon l'une quelconque des revendications précédentes, le couvercle de cassette (4) pouvant être déplacé par un mouvement de pivotement (S) sur le fond de cassette (2).

14. Cassette radiographique selon la revendication 13, le couvercle de cassette (4) et le fond de cassette (2) étant reliés entre eux au moyen d'une charnière (5).

15. Cassette radiographique selon la revendication 14, les éléments d'appui (10) étant disposés à proximité de la charnière (5).

16. Cassette radiographique selon la revendication 15, la distance des éléments d'appui (10) à la charnière (5) étant au maximum de 38 mm.

17. Cassette radiographique selon l'une quelconque des revendications précédentes, les éléments d'appui (10) présentant une distance d'au moins 210 mm les uns par rapport aux autres.

18. Cassette radiographique selon l'une quelconque des revendications précédentes, la distance des éléments d'appui (10) aux parois latérales (20) de la cassette radiographique (1) étant au moins aussi grande que la différence entre l'écartement des parois latérales (20) et la largeur du support d'image (3).
